# FASCICULE DE BREVET EUROPEEN

(11) **EP 2 051 000 B1**
(45) Date de publication et mention de la délivrance du brevet: **19.06.2013**
(21) Numéro de dépôt: 09001288.1
(22) Date de dépôt: 30.03.2007
(51) Int. Cl.: F17C 13/02, G01F 23/62

(54) **Bouteille à gaz à dispositif d'alerte**
Gasflasche mit Warnvorrichtung
Gas bottle with alarm device

(30) Priorité: 07.04.2006 FR 0603087
(43) Date de publication de la demande: 22.04.2009
(62) Demande divisionnaire de: 07290380.0
(73) Titulaire: Compagnie des Gaz de Pétrole Primagaz, 75017 Paris (FR)
(72) Inventeur: Bouvier, Daniel, 75011 Paris (FR)
(74) Mandataire: Eidelsberg, Victor Albert

(56) Documents cités:
- US-A- 4 290 059
- US-A- 4 536 756
- US-A- 4 736 077
- US-A- 6 012 411
- US-A1- 2002 121 973
- US-A1- 2005 269 532

## Description

Il est connu d'équiper les bouteilles de GPL d'un flotteur transmettant la hauteur du liquide et par voie de conséquence la quantité de gaz à un indicateur : la transmission se fait par couplage magnétique entre deux aimants à travers le corps du robinet - l'aimant entrant est commandé par le flotteur, l'aimant mené est relié à un indicateur, index, cadran gradué, etc...

Une telle disposition a un inconvénient majeur : les bouteilles de GPL sont situées généralement dans des endroits où la visibilité du robinet est faible voire nulle.

En effet, très souvent les bouteilles sont placées sous des plans de travail, des tablettes, dans des armoires voire même dans des cuisinières (cuisinières à logement de bouteille incorporé), la visibilité du robinet est donc très difficile du fait de l'absence d'éclairement, voire impossible du fait des obstacles.

L'utilité d'un indicateur de niveau est donc sérieusement remise en cause, car il faut le consulter spécialement.

Au EP-A- 228823, on décrit une cuve à propane pour ballon de voyageurs comprenant un flotteur relié à un aimant de manière à ce que son déplacement, en fonction du niveau du liquide dans la cuve, déplace l'aimant. L'aimant défile devant un interrupteur à effet magnétique, normalement ouvert, monté dans un circuit électrique ayant un dispositif d'alerte auditif.

Au US-A-5 831 536, on décrit un système pour prévenir le débordement d'une cuve dans un bateau et non pour prévenir que la cuve sera bientôt vide. Un flotteur déplace un aimant qui défile devant un interrupteur à effet magnétique normalement ouvert. Cet interrupteur est monté à l'intérieur de la cuve.
Le document US 4736077 présente un interrupteur à effet magnétique monté au niveau d'un réservoir de gaz

La présente invention propose non une cuve industrielle sujette à débordement, mais une bouteille à usage domestique qui se vide sans que l'utilisateur s'en aperçoive.

L'invention vise à empêcher que le moyen qui sert à prévenir l'utilisateur soit endommagé et à permettre à l'utilisateur d'utiliser un seul et même moyen successivement pour plusieurs bouteilles.

L'invention est définie à la revendication 1.

L'élément peut être un corps de valve ou de robinet. Dans une alternative ne faisant pas partie de l'invention l'élément peut être un doigt de gant.

Lorsque le niveau du gaz s'est abaissé dans la bouteille au point que l'on peut considérer que celle-ci doit être retournée à l'usine de remplissage, l'utilisateur retire le boîtier qui comporte l'interrupteur à effet magnétique tel que l'interrupteur à lame souple, relativement fragile et l'adapte à une autre bouteille pleine. La bouteille vide qui est soumise lors du stockage et du remplissage en usine à des conditions très dures, ne comporte plus l'interrupteur fragile qui se trouve ainsi préservé. En outre, un même boîtier peut servir sur plusieurs bouteilles successives.

Un interrupteur permet de mettre le buzzer hors circuit, cet interrupteur étant commandé par le contact de l'avertisseur avec le robinet de gaz (l'avertisseur étant contenu dans un boîtier amovible) ou par une manoeuvre manuelle. Il est également possible de mettre en place un circuit ne faisant fonctionner le buzzer que pendant une période donnée et à des intervalles espacés - par exemple 1 minute toutes les heures.

Suivant un autre mode de réalisation, le dispositif d'alerte comprend un émetteur radio qui envoie un signal d'alerte à un récepteur radio, lequel émet l'avertissement d'alerte.

Aux dessins annexés, donnés uniquement à titre d'exemple :
la figure 1 est une vue en coupe partielle d'une bouteille suivant l'invention,
la figure 2 représente une variante ne faisant pas partie de l'invention, et
la figure 3 illustre le circuit électrique.

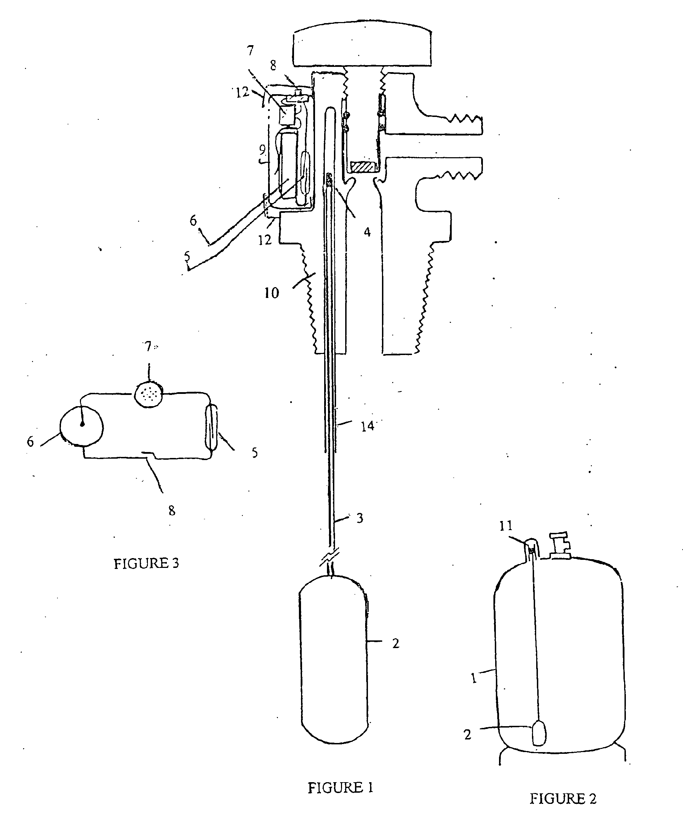

Les bouteilles à gaz à usage domestique représentées aux figures 1 et 2 comprennent un corps 1, dans lequel est placé un flotteur 2. le flotteur 2 suit le déplacement du niveau du liquide dans le corps 1. Par une tringlerie 3 de renvoi, le flotteur 2 déplace un aimant 4. L'aimant 4 défile devant un interrupteur 5 à lame souple, qui est monté dans un circuit électrique comprenant une pile 6, un buzzer 7 et un interrupteur 8 manuel. L'ensemble des éléments 5 à 8 est enfermé dans un boîtier 9.

A la figure 1, l'aimant se déplace dans une tige guide 14 ménagée dans le corps de valve 10 amagnétique et étanche de la bouteille.

A la figure 2, l'élément amagnétique dans lequel se déplace l'aimant est un doigt de gant 11.

Le corps 10 de valve comprend des crochets 12 qui retiennent le boîtier 9 avec possibilité de le décrocher et donc de le mettre sur une autre bouteille. Lorsque le boîtier 9 est éloigné du corps 10 de valve, l'interrupteur 5 à lame souple s'éloigne obligatoirement de l'aimant 4 quelle que soit la position de celui-ci. Le circuit électrique comportant le dispositif 7 d'alerte s'ouvre.

## Revendications

1. Dispositif comprenant :
- une bouteille à gaz à usage domestique, notamment à gaz de pétrole liquéfié, ayant un flotteur (2) relié à un aimant (4) de manière à ce que son déplacement, en fonction du niveau du liquide dans la bouteille, déplace l'aimant (4) dans un élément (10, 11) amagnétique étanche,
- un interrupteur (5) à effet magnétique normalement ouvert, tel qu'un interrupteur à lame souple ou à effet Hall, devant lequel l'aimant (4) défile, logé dans un boîtier (9) et monté dans un circuit électrique ayant un dispositif (7) d'alerte,
- des moyens (12) de fixation amovible du boîtier (9) à l'élément (10, 11),
**caractérisé en ce que** l'élément amagnétique étanche est un corps (10) de valve, **en ce qu'**une pile (6) d'alimentation du circuit électrique est logée dans le boîtier (9) et **en ce que** le dispositif (7) d'alerte est logé dans le boîtier (9).

2. Dispositif **caractérisé en ce que** les moyens (12) de fixation sont tels qu'ils permettent à un utilisateur de la bouteille de retirer le boîtier (9) de l'élément (10) et de l'adapter en la même position à une autre bouteille identique.

3. Dispositif suivant la revendication 1 ou 2, **caractérisé en ce que** le boîtier (9) est accroché à l'élément (10).

4. Dispositif suivant la revendication 1, 2 ou 3, **caractérisé en ce que** l'élément est un doigt (11) de gant.

5. Dispositif suivant l'une des revendications précédentes, **caractérisé en ce que** le dispositif d'alerte est un buzzer.

6. Dispositif suivant l'une des revendications précédentes, **caractérisé en ce que** le circuit électrique comporte un interrupteur (8) manuel.

## Patentansprüche

1. Vorrichtung, umfassend:
- eine Haushaltsgas-, insbesondere Flüssiggasflasche, die einen Schwimmer (2) aufweist, der mit einem Magneten (4) verbunden ist, so dass seine Bewegung in Abhängigkeit des Pegels der Flüssigkeit in der Flasche den Magneten (4) in einem dichten, nicht magnetischen Element (10, 11) bewegt,
- einen normalerweise geöffneten Schalter (5) mit magnetischer Wirkung, wie einen Reed-Kontakt oder Hall-Effekt-Schalter, an dem der Magnet (4) vorbeiläuft, der in einem Gehäuse (9) aufgenommen und in einen eine Warnvorrichtung (7) aufweisenden Stromkreis geschaltet ist,
- Mittel (12) zum lösbaren Befestigen des Gehäuses (9) an dem Element (10, 11),
**dadurch gekennzeichnet, dass** das dichte, nicht magnetische Element ein Ventilkörper (10) ist, dass eine Batterie (6) zur Versorgung des Stromkreises in dem Gehäuse (9) aufgenommen ist und dass die Warnvorrichtung (7) in dem Gehäuse (9) aufgenommen ist.

2. Vorrichtung, **dadurch gekennzeichnet, dass** die Befestigungsmittel (12) derart sind, dass sie einem Benutzer der Flasche ermöglichen, das Gehäuse (9) von dem Element (10) abzunehmen und es in der gleichen Position an einer anderen identischen Flasche anzubringen.

3. Vorrichtung nach Anspruch 1 oder 2, **dadurch gekennzeichnet, dass** das Gehäuse (9) an dem Element (10) eingehängt ist.

4. Vorrichtung nach Anspruch 1, 2 oder 3, **dadurch gekennzeichnet, dass** das Element eine Tauchhülse (11) ist.

5. Vorrichtung nach einem der vorhergehenden Ansprüche, **dadurch gekennzeichnet, dass** die Warnvorrichtung ein Buzzer ist.

6. Vorrichtung nach einem der vorhergehenden Ansprüche, **dadurch gekennzeichnet, dass** der Stromkreis einen manuellen Schalter (8) umfasst.

## Claims

1. Device comprising:
- a gas bottle for domestic use, in particular liquefied petrol gas, comprising a float (2) connected to a magnet (4) such that its displacement, according to the level of liquid in the bottle, displaces the magnet (4) in a fluid-tight non-magnetic element (10, 11),
- a magnetic switch (5) which is usually open, such as a flexible blade switch or Hall effect switch, in front of which the magnet (4) runs, accommodated in a housing (9) and mounted in an electric circuit comprising a warning device (7),
- means (12) for fixing the housing (9) movably to the element (10, 11),
**characterised in that** the fluid-tight non-magnetic element is a valve body (10), **in that** a supply battery (6) of the electric circuit is housed in the housing (9) and **in that** the warning device (7) is accommodated in the housing (9).

2. Device **characterised in that** the fixing means (12) are such that they allow a user of the bottle to remove the housing (9) of the element (10) and set it in the same position for another identical bottle.

3. Device according to claim 1 or 2, **characterised in that** the housing (9) is hooked onto the element (10).

4. Device according to claim 1, 2, or 3, **characterised in that** the element is a finger pocket (11).

5. Device according to any one of the preceding claims, **characterised in that** the warning device is a buzzer.

6. Device according to any one of the preceding claims, **characterised in that** the electric circuit comprises a manual switch (8).
